# EUROPÄISCHE PATENTANMELDUNG

(11) **EP 0 899 058 A2**
(43) Veröffentlichungstag der Anmeldung: **03.03.1999**
(21) Anmeldenummer: 98116150.8
(22) Anmeldetag: 27.08.1998
(51) Int. Cl.: B23Q 17/22, B23Q 17/24

(54) **Verfahren und Vorrichtung zur Positionierung eines Werkzeugs**

(30) Priorität: 01.09.1997 DE 19738096
(71) Anmelder: ROBERT BOSCH GMBH, 70442 Stuttgart (DE)
(72) Erfinder: Schreier, Kurt, 73614 Schorndorf (DE); Hauser, Hermann, 74343 Sachsenheim (DE); Schilling, Ulrich, 70567 Stuttgart (DE)

(57) **Zusammenfassung**

Die Erfindung betrifft ein Verfahren zur Positionierung eines Werkzeugs, Bauteils o.dgl. relativ zu einem Werkstück, bei dem die tatsächliche Position des Werkstücks von einer Meßeinrichtung erfaßt wird, die Abweichung zu einer vorgegebenen Soll-Position berechnet wird, aus dem Ergebnis ein Korrekturwert für die Positionierung des Werkzeugs, Bauteils o.dgl. berechnet wird und anschließend das Werkzeug positioniert wird. Erfindungsgemäß ist vorgesehen, daß nach der Berechnung des Korrekturwerts das Werkzeug, Bauteil o.dgl. in einer relativ zur Meßeinrichtung reproduzierbaren Bewegung an einen fest vorgegebenen, durch den Korrekturwert korrigierten Endpunkt und damit in eine zweite Zielposition relativ zum Werkstück bewegt wird. Die Erfindung betrifft ferner eine Vorrichtung zur Durchführung des Verfahrens.

## Beschreibung

### Stand der Technik

Die Erfindung bezieht sich auf ein Verfahren und eine Vorrichtung zur Positionierung eines Werkzeugs.

Derartige Verfahren bzw. Vorrichtungen dienen dazu, z.B. bei der automatisierten Montage in Montagesystemen Werkzeuge bzw. Bauteile mit hoher Genauigkeit relativ zum Werkstück zu positionieren. Derartige Montagesysteme kommen z.B. bei SMD-Bestückungsautomaten zum Einsatz. Die am Markt verfügbaren SMD-Bestückungsautomaten erreichen im allgemeinen Genauigkeiten zwischen 20 µm und 100 µm. Höhere Genauigkeiten von z.B. 1 µm bis 10 µm erzielen beispielsweise Montagesysteme der Firma Gehringer oder der Firma Zevatech. Zevatech erbringt die Genauigkeit durch ein luftgelagertes Achssystem, während Gehringer das Werkzeug mit Hilfe eines speziellen Wegmeßsystems geregelt in Position fährt.

Um eine derartig große Präzision zu erreichen, werden Montagesysteme oft als bildgeführte Systeme gestaltet. Der Vorteil dieser bildgeführten Systeme besteht darin, daß mit ihnen Lagetoleranzen kompensiert werden können, wie sie beispielsweise durch die nicht exakte Präsentation eines Werkstücks oder auch durch Ungenauigkeiten des Werkstücks selbst entstehen. Dazu fährt das Achssystem des Montagesystems die vorgegebene Soll-Position des Werkstücks an. Anschließend ermittelt das Bildverarbeitungs-System die Abweichung zwischen der vorgegebenen und der tatsächlichen Werkstückposition. Dadurch läßt sich ein Korrekturwert ermitteln, der bei der anschließenden Positionierung des Werkzeugs mit berücksichtigt wird. Der Einfluß der Lagetoleranz des Werkstücks auf die Montagegenauigkeit wird durch dieses Vorgehen also prinzipiell eliminiert.

Die Werkzeugpositionierung ist jedoch aufgrund systeminhärenter Ungenauigkeiten immer fehleranfällig. Bei bildgeführten Systemen sind z.B. Kamera und Werkzeug in der Regel in einem Abstand von 50 mm und mehr zueinander versetzt angeordnet. Für die Positionierung des Werkzeugs muß das Achssystem also um diesen Abstand bewegt werden, und zwar zwischen der Erfassung der tatsächlichen Position des Werkstücks und dem Absetzen des Werkzeugs. Bei dieser Bewegung entstehen Positionierfehler. Diese sind auf unvermeidliche Ungenauigkeiten des Achssystems` z.B. auf Winkelfehler der Führungen, auf Teilungsfehler oder Meßfehler des Meßsystems oder auf Ungenauigkeiten der Spindelsteigung eines Spindelantriebs zurückzuführen. Da die Lage eines Werkstücks im Arbeitsraum beliebig sein kann und deshalb die Bewegung des Achssystems um den Abstand zwischen Kamera und Werkzeug von verschiedenen Positionen des Achssystems ausgehen muß, sind diese Positionierfehler im allgemeinen nicht reproduzierbar. Sie hängen vielmehr von der tatsächlichen Position des Werkstücks im Arbeitsraum ab.

Derartige Positionsfehler begrenzen somit die Gesamtgenauigkeit des Montagesystems.

Hochgenaue Positioniersysteme werden deshalb aus Präzisionsbaugruppen wie etwa Präzisionführungen, z. Bsp. Luftlager, und Meßsystemen höchster Genauigkeit aufgebaut. Damit soll die absolute Genauigkeit des Achssystems soweit wie möglich erhöht werden. Dieses Ziel wird jedoch teuer erkauft, da derartige Präzisionbaugruppen aufwendig und kostenintensiv sind. Derartige hochpräzise Montagesysteme sind also sehr kostspielig.

### Vorteile der Erfindung

Das erfindungsgemäße Verfahren mit den in Anspruch 1 angegebenen Merkmalen hat den Vorteil, daß es ein unaufwendiges Verfahren ist, mit dem gleichzeitig eine hohe Präzision im Submikrometerbereich (1 µm oder weniger) erreichbar ist. Dementsprechend ist die erfindungsgemäße Vorrichtung mit den in Anspruch 9 angegebenen Merkmalen einfach und kostengünstig.

Dem erfindungsgemäßen Verfahren gemäß Anspruch 1 bzw. der erfindungsgemäßen Vorrichtung gemäß Anspruch 9 liegt die Idee zugrunde, die an verschiedenen Positionen im Arbeitsraum des Montagesystems ausgeführte Bewegung des Werkzeugs, die zwischen der Erfassung der tatsächlichen Position des Werkstücks und dem Absetzen des Werkzeugs an seiner Zielposition erfolgt, so zu gestalten, daß sie von der aktuellen Werkstückposition unabhängig und daher reproduzierbar ist. Diese Bewegung braucht dann nur einmal vermessen zu werden; anschließend ist ihre Genauigkeit durch die Reproduzierbarkeit dieser Bewegung vorgegeben und bekannt.

Der erste Schritt des erfindungsgemäßen Verfahrens besteht darin, die Position des Werkstücks im Arbeitsraum des Montagesystems mit der Meßeinrichtung zu erfassen und diese mit der gewünschten Präzision relativ zum Werkstück zu positionieren. Diese Position der Meßeinrichtung nach erfolgter Positionierung wird im folgenden als 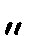 erste Zielposition" bezeichnet.

Das Werkzeug bewegt sich während der Positionierung der Meßeinrichtung mit dieser mit. Nach der Positionierung wird das Werkzeug in einer bekannten, reproduzierbaren Bewegung an seine Position gefahren. Diese Position des Werkzeugs wird im folgenden als 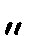 zweite Zielposition" bezeichnet. Sie kann auf der x- und der y-Achse gleich oder verschieden von der ersten Zielposition der Meßeinrichtung sein.

Durch die Reproduzierbarkeit der Bewegung des Werkzeugs ist seine zweite Zielposition genau bekannt und fest vorgegeben. Dies kann entweder durch die Korrektur der Position der Meßeinrichtung erreicht werden. Die zweite Zielposition des Werkzeugs ist also dann bekannt, wenn die Meßeinrichtung in ihrer ersten Zielposition positioniert ist. Dies kann aber auch durch Vorgabe eines festen Endpunktes der Bewegung des Werkzeugs erreicht werden. Die Bewegung des Werkzeugs endet dann immer an einem fest vorgegebenen Punkt, wodurch auch die zweite Zielposition des Werkzeugs bekannt ist.

Das Achssystem muß also in beiden Fällen nach der Bewegung der Meßeinrichtung zur Erfassung der Werkstückposition bzw. zur Positionierung der Meßeinrichtung in ihre erste Zielposition relativ zum Werkstück nicht mehr bewegt werden. Dadurch muß die absolute Genauigkeit des Achssystems nicht übermäßig groß und insbesondere nicht über den gesamten Arbeitsraum der Vorrichtung konstant sein.

Die insgesamt resultierende Positioniergenauigkeit des Montagesystems wird also durch die Reproduzierbarkeit der Werkzeugbewegung und nicht durch die absolute Genauigkeit des Achssystems bestimmt. Damit sind bei gleichzeitiger unaufwendiger Konstruktion der Vorrichtung Genauigkeiten im Submikrometerbereich (1 µm oder weniger) möglich.

Das erfindungsgemäße Verfahren bzw. die erfindungsgemäße Vorrichtung eignen sich nicht nur für die Positionierung eines Werkzeugs relativ zu einem Werkstück, sondern selbstverständlich für die Positionierung eines beliebigen Bauteils relativ zu einem anderen Bauteil.

Durch die in den Unteransprüchen aufgeführten Maßnahmen sind vorteilhafte Weiterbildungen der im Verfahrensanspruch 1 bzw. im Vorrichtungsanspruch 9 angegebenen Erfindung möglich.

Die erste Zielposition der Meßeinrichtung und damit die Ausgangslage des Werkzeugs relativ zum Werkstück kann in vorteilhafter Weise iterativ angefahren werden, bis die Meßeinrichtung mit der vorgegebenen Genauigkeit ihre erste Zielposition relativ zum Werkstück erreicht hat.

Zur Vorgabe des festen Endpunktes der Werkzeugposition kann statt dessen, aber auch zusätzlich ein Festanschlag vorgesehen sein, gegen den das Werkzeug bewegt wird. Damit läßt sich auf besonders einfache und kostengünstige Weise eine hohe Reproduzierbarkeit der Werkzeugbewegung erzielen. Der Festanschlag kann unveränderlich, z.B. ein Stift oder dergleichen sein. Er kann aber auch verstellbar sein und zwar mechanisch verstellbar, z.B. in Form einer Schraube, oder auch elektrisch verstellbar, z.B. in Form eines Piezostapels.

Je nach Anwendung kann es aber auch vorteilhaft sein, daß eine Regeleinrichtung vorgesehen ist, so daß die Bewegung des Werkzeugs geregelt durchführbar ist. Das schafft eine größere Flexibilität hinsichtlich der einsetzbaren Werkzeuge und Werkstücke. Die Regeleinrichtung kann z.B. durch einen Servoantrieb in Verbindung mit einem Meßsystem realisiert sein. Auch diese geregelte Bewegung wird in einem Kalibrierlauf vermessen. Die Kalibrierung wird anschließend bei der Lagekorrektur der Meßeinrichtung entsprechend berücksichtigt werden. Damit ist die Reproduzierbarkeit der Werkstückbewegung hin zur zweiten Zielposition gewährleistet.

Die Bewegung des Werkzeugs kann beliebig sein; es kann sich um eine lineare Verschiebung, eine Rotationsbewegung oder eine Schwenkbewegung oder auch um eine Kombination aus zwei oder mehreren dieser Bewegungsarten handeln.

Je nach Anwendung können statt nur eines Anschlags bzw. einer einzigen Regeleinrichtung zwei oder mehr Anschläge bzw. Regeleinrichtungen vorgesehen sein, so daß auch zwei oder mehrere Werkzeuge in eine Zielposition bzw. in mehrere Zielpositionen bewegt werden können.

Die vorliegende Erfindung ist nicht auf bestimmte Meßsysteme beschränkt. Sie kann vielmehr nicht nur bei bildgeführten und anderen optischen Meßsystemen, sondern auch Prinzipiell bei beliebigen Meßsystemen eingesetzt werden.

### Zeichnung

Im folgenden wird die Erfindung anhand eines Ausführungsbeispiels mit Bezug auf die beigefügten Zeichnungen näher erläutert. Es zeigen:
- Figur 1: eine schematische Darstellung eines erfindungsgemäßen Montagesystems;
- Figur 2: eine schematische vergrößerte Darstellung des Bildausschnitts II in Figur 1.

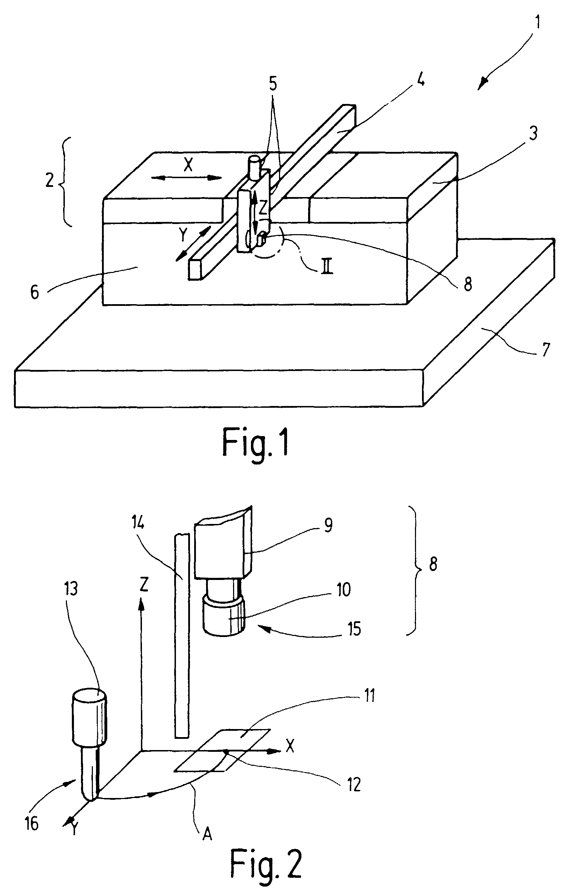

Das in Figur 1 schematisch dargestellte Montagesystem 1 ist ein bildgeführtes System. Es weist ein 3-Achs-System 2 mit je einer x-Achse 3, einer y-Achse 4 und einer z-Achse 5 auf. Die Achsen 3, 4 und 5 sind mit je einem Antrieb und einem Meßsystem, z. B. einem Glasmaßstab versehen, die hier nicht gezeigt sind, um die Darstellung übersichtlicher zu gestalten. Das Meßsystem ist aber nicht zwingend erforderlich, sondern optional. Das 3-Achs-System 2 ist auf einer Unterlage 6 montiert, die wiederum auf einer Tischplatte 7 befestigt ist.

Die Meßeinrichtung 8 ist an der z-Achse 5 montiert. Wie der Bildausschnitt in Figur 2 zeigt, handelt es sich dabei um eine Kamera 9 mit Optik und Beleuchtung 10. Die Kamera 9 ist in der Lage, ein Bildfenster 11 zu erfassen, welches die tatsächliche Position eines hier nicht dargestellten Werkstücks umschließt.

In der Nähe der Kamera 9 ist ein Werkzeug 13 in einem relativ zur Meßeinrichtung 8 vorgegebenen Punkt 16 angeordnet. 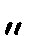 Vorgegeben" bedeutet hier, daß das Werkzeug 13 mit der Kamera 9 bewegt wird, sein Abstand zur Kamera 9 im wesentlichen also konstant ist. Im Ausführungsbeispiel ist das Werkzeug 13 an der z-Achse 5 befestigt. Zwischen z-Achse 5 und Werkzeug 13 ist eine Halteeinrichtung mit einem Antrieb vorgesehen, mittels dessen die reproduzierbare Bewegung des Werkzeugs 13 ausgeführt werden kann. Das Werkzeug 13 soll im vorliegenden Fall in einer, durch den Pfeil A symbolisierten, rotatorischen Schwenkbewegung in seine zweite Zielposition 12 gefahren werden. Die Halteeinrichtung und der Antrieb sind aus Gründen der Übersichtlichkeit ebenfalls nicht dargestellt. Das Werkzeug 13 ist gegen einen Festanschlag 14 bewegbar, der ebenfalls auf der z-Achse 5 in einer relativ zur Meßeinrichtung 8 fest vorgegebenen Lage montiert ist.

Im folgenden wird die Arbeitsweise des dargestellten Montagesystems 1 erläutert.

Wie bei bildgeführten Systemen üblich, wird zunächst die vorgegebene Soll-Position des Werkstücks mit dem Achssystem 2 grob angefahren. Das von der Optik 10 und der Kamera 9 definierte, in der x/y-Ebene gelegene Bildfenster 11 umschließt dann in der Regel die tatsächliche Position des Werkstücks. Es genügt auch, wenn das Bildfenster 11 der Kamera 9 das Werkstück nur teilweise umschließt.

Nachdem die Kamera 9 grob in die Position eingefahren ist, in der das von der Optik 10 bestimmte Bildfenster 11 die Werkstückposition umschließt, wird die tatsächliche Lage des Werkstücks mit der Kamera 9 erfaßt.

Die theoretisch vorgegebene Soll-Position des Werkstücks stimmt dabei nur in den seltensten Fällen mit der tatsächlichen Position des Werkstücks überein. Die Kamera 9 ermittelt nun die Lageabweichung zwischen der tatsächlichen Position und der Soll-Position des Werkstücks. Aus dieser Lageabweichung wird ein Korrekturwert errechnet.

Im Gegensatz zu konventionellen Montagesystemen wird nun erfindungsgemäß eine erste Zielposition 15 der Meßeinrichtung 8 in Abhängigkeit von der tatsächlichen Position des Werkstücks ermittelt. Dazu wird die Kamera 9 zunächst scharf eingestellt, indem sie entlang der z-Achse nach oben oder unten bewegt wird. Damit liegt die z-Koordinate der ersten Zielposition 15 fest. Dann wird eine Positionskorrektur der Lage des Meßeinrichtung 8 in der x,y-Ebene im Verhältnis zur tatsächlichen Position des Werkstücks durchgeführt. Anschließend nimmt die Meßeinrichtung 8 ihre erste Zielposition 15 ein.

Die Erfassung der Lage des Werkstücks inklusive der Lagekorrektur der Meßeinrichtung 8 wird iterativ wiederholt, bis sie mit der vorgegebenen Genauigkeit, z. Bsp. 1 µm, in ihrer ersten Zielposition 15, im Ausführungsbeispiel über dem Werkstück, positioniert ist.

Der Punkt 16 des Werkzeugs 13 relativ zur Meßeinrichtung 8 ist im wesentlichen konstant und wird auch während der Bewegung der Meßeinrichtung 8 nicht wesentlich verändert. Die Bewegung des Werkzeugs 13 entlang dem Pfeil A ist kalibriert und daher ebenfalls bekannt und mit hoher Genauigkeit reproduzierbar. Der Endpunkt der Bewegung ist relativ zur ersten Zielposition 15 der Meßeinrichtung 8 fest vorgegeben. Deswegen wird mit der Positionskorrektur des Meßeinrichtung 8 auch die zweite Zielposition 12 des Werkzeugs 13 eingeregelt. Wenn die Meßeinrichtung 8 ihre erste Zielposition 15 erreicht hat, liegt damit auch die zweite Zielposition 12 des Werkzeugs 13 fest.

Nachdem die Meßeinrichtung 8 ihre erste Zielposition 15 erreicht hat, wird das Achssystem 2 nicht mehr bewegt. Das Werkzeug 13 wird auf dem reproduzierbaren Weg, der mit dem Pfeil A symbolisiert ist, auf eine fest vorgegebene Endposition und damit auf zweite Zielposition 12 eingeschwenkt. Diese liegt im Ausführungsbeispiel unter der Kamera 9. Für die feste Vorgabe der zweiten Zielposition 12 ist im Ausführungsbeispiel der an der z-Achse 5 befestigte Festanschlag 14 vorgesehen, gegen den das Werkzeug 13 bewegt wird. Damit läßt sich auf einfache und kostengünstige Weise eine hohe Reproduzierbarkeit der Bewegung des Werkzeugs 12 erzielen. Der Festanschlag 14 ist in diesem Fall ein fester Stift. Er kann aber auch mechanisch oder elektrisch verstellbar sein, z.B. in Form einer Schraube oder eines Piezostapels.

Nicht dargestellt ist, daß das Einschwenken des Werkzeugs 13 entlang des Wegs A ebenfalls geregelt durchgeführt werden kann. Dies ist beispielsweise mit einem Servoantrieb in Verbindung mit einem weiteren Meßsystem möglich, wobei dieses Meßsystem den zurückgelegten Weg erfaßt und den Servomotor anhält, sobald der vorgegebene Weg A zurückgelegt ist. Ein Fehler in diesem Meßsystem, der zu einer Ungenauigkeit hinsichtlich der exakten Position des Werkzeugs 13 im Bildfenster 11 der Kamera 9 führen könnte, ist dabei nicht relevant. Diese Position wird vor der ersten groben Lageerfassung des Werkstücks durch die Kamera 9 in einem separaten Kalibrierlauf vermessen. Bei den anschließenden Lageerfassungs- und Korrekturschritten, mit denen die Meßeinrichtung exakt in ihrer ersten Zielposition über dem Werkstück positioniert wird, wird die tatsächliche zukünftige Position des Werkzeugs 13 im Bildfenster 11 der Kamera 9 berücksichtigt.

In jedem Fall ist also nur eine einmalige Lagekorrektur des Achssystems 2 nötig, nämlich bei der exakten Positionierung der Meßeinrichtung 8 in ihrer ersten Zielposition 15. Ist diese einmal erreicht, wird das Achssystem 2 nicht mehr bewegt. Da die Positioniergenauigkeit des Montagesystems 1 nur durch die Reproduzierbarkeit der Werkzeugbewegung bestimmt wird und nicht mehr durch die absolute Genauigkeit des Achssystems 2 selbst, sind die Anforderungen an die Genauigkeit des Achssystems 2 nicht mehr so hoch. Das Montagesystem 1 ist dadurch wesentlich einfacher und kostengünstiger als bisher.

## Patentansprüche

1. Verfahren zur Positionierung eines Werkzeugs, Bauteils o.dgl. relativ zu einem Werkstück, bei dem die tatsächliche Position des Werkstücks von einer Meßeinrichtung erfaßt wird, die Abweichung zu einer vorgegebenen Soll-Position berechnet wird, aus dem Ergebnis ein Korrekturwert berechnet wird und anschließend das Werkzeug positioniert wird, dadurch gekennzeichnet, daß nach der Berechnung des Korrekturwerts das Werkzeug, Bauteil o.dgl. in einer relativ zur Meßeinrichtung reproduzierbaren Bewegung an einen fest vorgegebenen, durch den Korrekturwert korrigierten Endpunkt und damit in eine zweite Zielposition relativ zum Werkstück bewegt wird.

2. Verfahren nach Anspruch 1, dadurch gekennzeichnet, daß das Werkzeug, Bauteil o. dgl. gegen einen Festanschlag bewegt wird, welcher den Endpunkt der Bewegung vorgibt und dessen Position durch den vorher ermittelten Korrekturwert bewegt wird.

3. Verfahren nach Anspruch 1, dadurch gekennzeichnet, daß das Werkzeug, Bauteil o.dgl. geregelt bewegt wird und somit der Endpunkt der Bewegung fest vorgegeben wird.

4. Verfahren nach Anspruch 3, dadurch gekennzeichnet, daß die Bewegung des Werkzeugs kalibriert wird.

5. Verfahren nach einem der vorhergehenden Ansprüche, dadurch gekennzeichnet, daß nach der Berechnung des Korrekturwertes die Position der Meßeinrichtung korrigiert wird, so daß sie sich in einer ersten Zielposition relativ zum Werkstück befindet und anschließend das Werkzeug, Bauteil o.dgl. in seine zweite Zielposition bewegt wird.

6. Verfahren nach Anspruch 5, dadurch gekennzeichnet, daß die Meßeinrichtung iterativ bewegt wird und nach jeder Bewegung ein Korrekturwert ermittelt wird, bis sie ihre erste Zielposition erreicht hat.

7. Verfahren nach einem der vorhergehenden Ansprüche, dadurch gekennzeichnet, daß das Werkzeug, Bauteil o.dgl. in einer linearen Verschiebung und/oder einer Schwenkbewegung und/oder einer rotatorischen Bewegung bewegt wird.

8. Verfahren nach einem der vorhergehenden Ansprüche, dadurch gekennzeichnet, daß eine Meßeinrichtung mit einem optischen Meßsystem verwendet wird.

9. Verfahren nach Anspruch 8, dadurch gekennzeichnet, daß ein bildverarbeitendes Meßsystem verwendet wird.

10. Vorrichtung (1) zur Durchführung des Verfahrens nach einem der Ansprüche 1 bis 9, mit einer Meßeinrichtung (8), welche an einer Achse (3,4,5) eines bewegbaren Achssystems (2) befestigt ist, mindestens einer Einrichtung zur Positionierung eines Werkstücks im Arbeitsraum innerhalb der Vorrichtung (1), mindestens einer Einrichtung zur Positionierung eines Werkzeugs (13), Bauteils o.dgl. relativ zum Werkstück, dadurch gekennzeichnet, daß das Werkzeug abhängig von der Bewegung der Meßeinrichtung (8) bewegbar ist, daß das Werkzeug (13) unabhängig von der Bewegung des Achssystems (2) bewegbar ist und daß eine Einrichtung (14) zur Positionierung des Werkzeugs (13), Bauteils o.dgl. vorgesehen ist, die in einer relativ zur Meßeinrichtung (8) fest vorgegebenen Lage angeordnet ist, so daß das Werkzeug, Bauteil o.dgl. in einer reproduzierbaren Bewegung (A) relativ zur Meßeinrichtung (8) in eine fest vorgegebene zweite Zielposition (12) bewegbar ist.

11. Vorrichtung nach Anspruch 10, dadurch gekennzeichnet, daß ein Festanschlag (14) vorgesehen ist, gegen den das Werkzeug (13), Bauteil o.dgl. bewegbar ist.

12. Vorrichtung nach Anspruch 11, dadurch gekennzeichnet, daß der Festanschlag (14) mechanisch oder elektrisch verstellbar ist.

13. Vorrichtung nach Anspruch 11, dadurch gekennzeichnet, daß der Festanschlag (14) fest eingestellt ist.

14. Vorrichtung nach Anspruch 10, dadurch gekennzeichnet, daß als Einrichtung (14) eine Einrichtung zur Regelung der Bewegung des Werkzeugs (13), Bauteils o.dgl. vorgesehen ist.

15. Vorrichtung nach Anspruch 14, dadurch gekennzeichnet, daß die Einrichtung einen Antrieb in Verbindung mit einem Meßsystem aufweist.

16. Vorrichtung nach einem der Ansprüche 10 bis 15, dadurch gekennzeichnet, daß die Meßeinrichtung (8) ein optisches Meßsystem (9, 10) aufweist.

17. Vorrichtung nach Anspruch 16, dadurch gekennzeichnet, daß als optisches Meßsystem ein bildverarbeitendes System vorgesehen ist.
